(19) Europäisches Patentamt
European Patent Office
Office européen des brevets

(11) **EP 3 144 884 A1**

(12) **EUROPEAN PATENT APPLICATION**

(43) Date of publication:
**22.03.2017 Bulletin 2017/12**

(51) Int Cl.:
***G06T 5/50*** (2006.01)

(21) Application number: **15306434.0**

(22) Date of filing: **17.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Thomson Licensing 92130 Issy-les-Moulineaux (FR)**

(72) Inventors:
• **SEIFI, Mozhdeh 35576 CESSON-SÉVIGNÉ (FR)**
• **DRAZIC, Valter 35576 CESSON-SÉVIGNÉ (FR)**

(74) Representative: **Barr, Angela Louise TECHNICOLOR 1-5, rue Jeanne d'Arc 92130 Issy-les-Moulineaux (FR)**

(54) **LIGHT FIELD DATA REPRESENTATION**

(57)     A method of generating data representative of a light field comprising

acquiring (S701) light field data representative of light field rays captured from a scene;

obtaining (S702), from the acquired light field data, intersection data defining intersections of the light field rays from the scene with a plurality of given reference planes, said reference planes being parallel to one another and corresponding to different depths in the scene; and

obtaining ray diagram parameters (S704, S705) defining the graphical representation of the intersection data in a ray diagram to provide data representative of the acquired light field data.

**FIG. 4A**

**FIG. 4B**

**Description**

TECHNICAL FIELD

The present invention relates to generation of data representing a light field. An aspect of the invention relates to the provision and processing of light field metadata.

BACKGROUND

Conventional cameras capture light from a three-dimensional scene on a two-dimensional sensor device sensitive to visible light. Light sensitive technology used in such imaging devices is often based on semiconductor technology, capable of converting photons into electrons such as, for example, charge coupled devices (CCD) or complementary metal oxide technology (CMOS). A digital image photosensor, for example, typically includes an array of photosensitive cells, each cell being configured to capture incoming light. A 2D image providing spatial information is obtained from a measurement of the total amount of light captured by each photosensitive cell of the image sensor device. While the 2D image can provide information on the intensity of the light and the colour of the light at spatial points of the photosensor(s), no information is provided on the direction of the incoming light.

Light field cameras (also known as radiance capturing cameras) can provide directional information on incoming light rays in additional to 2D spatial information. The directional information may be obtained by the use of an array of micro-lenses, often referred to as a microlens array (MLA) associated with an image sensor. A light field array camera, for example, is provided with a microlens array and a photosensor. Light field cameras include plenoptic cameras, camera arrays and distributed cameras. A plenoptic camera is provided with a main lens focusing light on a MLA, and a photosensor associated with the MLA. In other configurations of light field cameras a plurality of cameras each provided with its own lens and sensor may be used to obtain light field data.

A light field is often defined as a 4D function characterizing the light from different directions at different points in a scene. The information on the directional distribution of the light rays is typically referred to as light field data or 4D data. Since the information provides 4 parameters - two dimensional positional information and two dimensional angular information the directional distribution corresponds to a four-dimensional (4D) function. The light field may be interpreted as a two dimensional collection of 2D images of a scene.

The light field data obtained can be processed for many applications, for example, to generate refocused images of the scene, to generate images from different viewpoints, to provide depth information on the captured scene or to generate 3D images.

Light field data can take up large amounts of storage space which can make storage cumbersome and processing less efficient. In addition light field acquisition devices are extremely heterogeneous. Light field cameras are of different types for example plenoptic or camera arrays. Within each type there are many differences such as different optical arrangements, or micro-lenses of different focal lengths. Each camera has its own proprietary file format. At present here is no standard supporting the acquisition and transmission of multi-dimensional information for an exhaustive over-view of the different parameters upon which a light-field depends. As such acquired light field data for different cameras have a diversity of formats

The present invention has been devised with the foregoing in mind.

SUMMARY OF INVENTION

According to a first aspect of the invention there is provided a method of generating data representative of a light field comprising acquiring light field data representative of light field rays captured from a scene; obtaining , from the acquired light field data, intersection data defining intersections of the light field rays from the scene with a plurality of given reference planes, said reference planes being parallel to one another and corresponding to different depths in the scene; and obtaining ray diagram parameters defining the graphical representation of the intersection data in a ray diagram to provide data representative of the acquired light field data.

The ray diagram may be a 2D ray diagram or a 4D ray diagram. Preferably the ray diagram is a 4D ray diagram

In an embodiment, the interception data corresponding to the light field rays is graphically represented in the ray diagram as datalines or data hyper planes and the ray diagram parameters include data representative of at least one of: the slope of a dataline or hyper plane ; and an interception of a dataline with an axis of the ray diagram.

In an embodiment, the datalines or data hyper planes are detected in the ray diagram by applying a Radon transform.

In an embodiment, the graphical representation is provided as a matrix of cells to provide a digital dataline or data hyper plane, each digital dataline or data hyper plane format being defined by a plurality of cells, at least one first cell representative of the interception of the line with an axis and at least one second cell from which the slope of the line may be determined.

In an embodiment, each digital dataline or data hyper plane is generated by application of Bresenham's algorithm.

In an embodiment, the data representative of the acquired light field data comprises data defining the matrix of cells.

In an embodiment, the data representative of the acquired light field data further comprises colour data representing the colour of the corresponding light field rays.

In an embodiment, the data representative of the acquired light field data comprises data defining the number of cameras used to capture the light field rays.

In an embodiment, a beam of rays is represented as a plurality of lines or hyper planes having the same slope and different axis interception points.

In an embodiment, the data representative of the acquired light field data comprises data representative of the thickness of the beam based on upper and lower boundaries of the axis interception data of lines of the beam.

In an embodiment, the data representative of the acquired light field data is provided as meta data, the header of meta data comprising the ray diagram parameters defining the graphical representation of the intersection data in a ray diagram and the body of the metadata comprising data representative of colour of the ray.

A second aspect of the invention provides a device for providing metadata for captured light field data, the device comprising a light field data acquisition module for acquiring light field data captured by a light field camera and a light field data generation module configured to obtain, from the acquired light field data, intersection data defining intersections of the light field rays from the scene with a plurality of given reference planes, said reference planes being parallel to one another and corresponding to different depths in the scene; and obtain ray diagram parameters defining the graphical representation of the intersection data in a ray diagram to provide data representative of the acquired light field data.

A further aspect of the invention provides a light field imaging device comprising: an array of micro lenses arranged in a regular lattice structure; a photosensor configured to capture light projected on the photosensor from the array of micro lenses, the photosensor comprising sets of pixels, each set of pixels being optically associated with a respective micro lens of the array of micro lenses; and a device for providing metadata in accordance with any embodiment of the second aspect of the invention.

A further aspect of the invention provides a device for rendering an image from light field data a processor for processing data obtained in accordance with the method of any embodiment of the first aspect of the invention; and a display for rendering an image in accordance with the processed data

Another aspect of the invention provides a data package for data representative of rays of a light field comprising ray diagram parameters defining the graphical representation in a ray diagram of intersection data of the light rays, the intersection data defining intersections of the light field rays from the scene with a plurality of given reference planes, said reference planes being parallel to one another and corresponding to different depths in the scene; and colour data defining colours of the light field ray. The data package may be carried by a signal or provided on a non-transient medium.

Some processes implemented by elements of the invention may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as a "circuit", "module" or "system'. Furthermore, such elements may take the form of a computer program product embodied in any tangible medium of expression having computer usable program code embodied in the medium.

Since elements of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

BRIEF DESCRIPTION OF THE DRAWINGS

Embodiments of the invention will now be described, by way of example only, and with reference to the following drawings in which:

FIG. 1A is a schematic diagram of a light field camera according to a first embodiment of the invention;
FIG. 1B is a schematic diagram of a light field camera according to a second embodiment of the invention;
FIG. 2A is a functional diagram of a light field camera according to an embodiment of the invention;
Figure 2B is a functional diagram of a light field data formator and light field data processor according to an embodiment of the invention;

FIG. 3 is an example of a 2D light field image formed on a photosensor array;

FIG. 4A and 4B graphically illustrate the use of reference planes for parameterisation of light field data in accordance with one or more embodiments of the invention;

FIG. 5 schematically illustrates representation of light field rays with respect to reference planes in accordance with embodiments of the invention

FIG. 6A to 6D graphically illustrate parameterisation of rays including representation of rays in 2D ray diagrams, in accordance with one or more embodiments of the invention;

FIG. 7A is a flow chart illustrating steps of a method in accordance with one or more embodiments of the invention;

FIG. 7B is a functional block diagram illustrating modules of a device for providing a light data format in accordance with one or more embodiments of the invention;

FIG. 8 schematically illustrates parameters for representation of light field rays in accordance with embodiments of the invention;

FIG. 9 is a 2D ray diagram graphically illustrating intersection data in accordance with embodiments of the invention;

FIG. 10 graphically illustrates a digital line generated in accordance with embodiments of the invention;

FIG. 11 graphically illustrates digitals line generated in accordance with embodiments of the invention;

FIG. 12-12C graphically illustrate Radon transforms applied to a digital line in accordance with embodiments of the invention; and

FIG 13 is a 2D ray diagram graphically illustrating intersection data for a plurality of cameras in accordance with embodiments of the invention

<u>DETAILED DESCRIPTION</u>

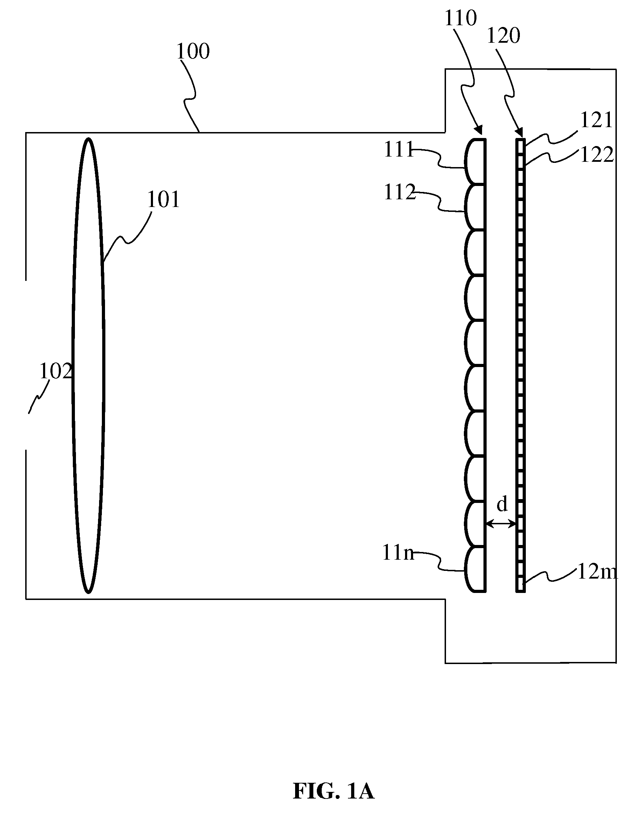

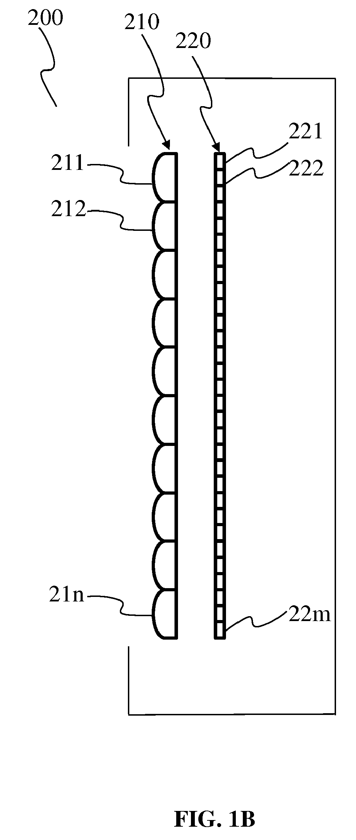

Light-field cameras are typically used to record a 4D light-field on a sensor composed of an array of pixels. The 4D light-field data provides 2-dimensional spatial information and 2-dimensional angular information on the incoming light. Such light-Field cameras may be for instance: a plenoptic camera 100 comprising a main lens 101, an array of lenses 110 and a photo sensor 120 as illustrated in Figure 1 A; or a multi-camera array comprising an array of lenses 210 and a photosensor 220 without a main lens, as illustrated in Figure 1B. A multi-array camera may be considered as a particular case of a plenoptic camera where the mains lens has an infinite focal.

Embodiments of the invention provide formatting of light field data for further processing applications such as format conversion, refocusing, viewpoint change and 3D image generation.

Figure 1A is a schematic diagram of a light field camera for which one or more embodiments of the invention may be applied.

The light field camera 100 of Figure 1A is a plenoptic type light field camera comprising a micro lens array 110 and an image sensor 120 associated with the micro lens array 110. Further optics may be provided such as an aperture 102 for enabling a selectable amount of light to enter into the light field camera. The lens arrangement further includes a main (objective) lens 101 for focusing light towards the micro lens array 110.

The micro lens array 110 is composed of an array of microlenses 111, 112, 113...11 n arranged, in a regular lattice structure. For example, the structure may be a rectangular lattice of rows and columns. The micro lens array may also be referred to as a lenslet array. For purposes of illustration, the microlens array 110 is shown with a relatively small number of microlenses, but it will be appreciated that the number of microlenses may reach up to several thousand or even several million microlenses.

Optionally, spacers might be placed around each micro lens of the micro-lens array 110 between the micro-lens array 110 and the image sensor 120 in order to prevent light from one micro lens from overlapping with light of other microlenses of the microlens array 110 at the image sensor 120.

The image sensor comprises a photosensor array 120 composed of a number m of photo sensors 121, 122, 123, 124.....12m arranged in a lattice structure. For example the structure may be a rectangular lattice of rows and columns.Each photosensor 121, 122, 123, 124.....12m corresponds to a pixel or a group of pixels of the raw image of the scene captured by the photosensor array 120, each pixel covering a part (also referred to as a point) of the scene. For purposes of illustratio, the photosensor array 120 is illustrated as having a relatively small number of photosensors 121 to 121m. It will be appreciated, however, that, the number of photosensors is not limited to that illustrated in Figure 1A but may be extended to any number of photosensors, for example several thousand or several million photosensors. As an illustrative example, an image of 12.4 megapixels may be provided by an array of 4088x3040 pixels/photosensors. The image sensor may be for example a charge coupled device (CCD).

The microlenses 111, 112, 11 n of the micro lens array 110 are arranged such that each microlens is optically associated with photosensors of the photo sensor array 120. The photosensor array 120 is generally of finer pitch than the microlens array. Accordingly, each microlens is associated with a plurality of photosensors of the photosensor array 120. Optical association between a microlens and a group of photosensors signifies that the light rays passing through a given microlens reach at least one of the group of photosensors optically associated with the given microlens.

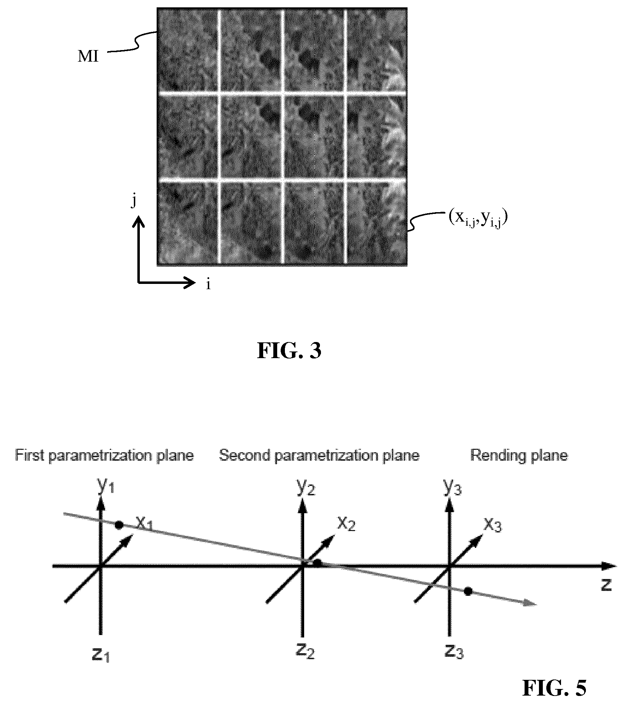

The interposition of the microlens array 110 between the main lens 101 and the photosensor 120 results in multiple images being formed on the photosensor array 120. Each microlens of the microlens array 110 projects a respective image, onto the associated photosensors of the photosensor array 120. Accordingly the raw image captured by the image sensor 120 is composed of an array of small images, as for example illustrated in Figure 3, typically referred to as micro-images. Each micro-image corresponds to a partial field of view from a respective different viewpoint. and corresponds to a micro-lens of the microlens array. Each pixel of photosensor 120 may be seen as corresponding to a 4D light field coordinate where two dimensions specify its spatial position on the sensor and two dimensions specify the angular or directional information of light that is incident upon that pixel according to the 2D position of the pixel within the microimage which it belongs to.

A color filter array (CFA) may in some cases be arranged on the microlens array 110 or on the photosensor array 120. The CFA typically arranges RGB (Red, Green and Blue) color filters on the photosensor or microlens array, the RGB arrangement taking, for example, the form of a Bayer filter mosaic. One color filter (red, green or blue filter) may be associated with an MLA according to a predetermined pattern, comprising 50 % green, 25 % red and 25 % blue in the example of a Bayer filter, such a pattern also being referred to as a RGBG, GRGB or RGGB pattern. It will be appreciated that, the arrangement of the color filters on the microlens array 110 or photosensor array 120 is not limited to a RGGB pattern. In other embodiments, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

The gap between the microlens array and the photosensor array may be composed of air, of an optical material having an index n (for example a glass layer) or of multiple layers comprising at least one layer air layer and at least one optical material layer. Using a glass layer to form the gap has the advantages of keeping the microlens array 110 at a constant distance from the photosensor array 120 uniformly across the photosensor array 120 and of reducing this distance when needed. If d is the distance between the output of the microlens array 110 and the photosensor array 120 along a longitudinal axis, having a layer composed of an optical material with an index n (n > 1, for example n = 1.5) between the micro lens array 110 and the photosensor array 120 enables the distance to be set to d/n without modifying the distance d. By adapting/modifying the index of the optical material of the layer forming the gap, it is possible to adapt/modify a parameter representative of the distance between the microlens array 110 and the photosensor array 120 without modifying the distance d.

Figure 1B is a schematic diagram of a light field camera according to a second embodiment of the invention.

The light field camera 200 according to the second embodiment of the invention is a multi camera array type light field camera comprising a micro lens array 210 and an image sensor 220 associated with the micro lens array 210. In this embodiment a main lens 201 for focusing light towards the micro lens array 210 is not present. Elements such as the photosensor array 220 and micro lens array 210 operate in a similar manner to the corresponding elements of the plenoptic type camera of Figure 1A. The main difference is that the main lens is not present in the embodiment of Figure 1B. Each micro-image corresponds to a full field of view from a respective different viewpoint.

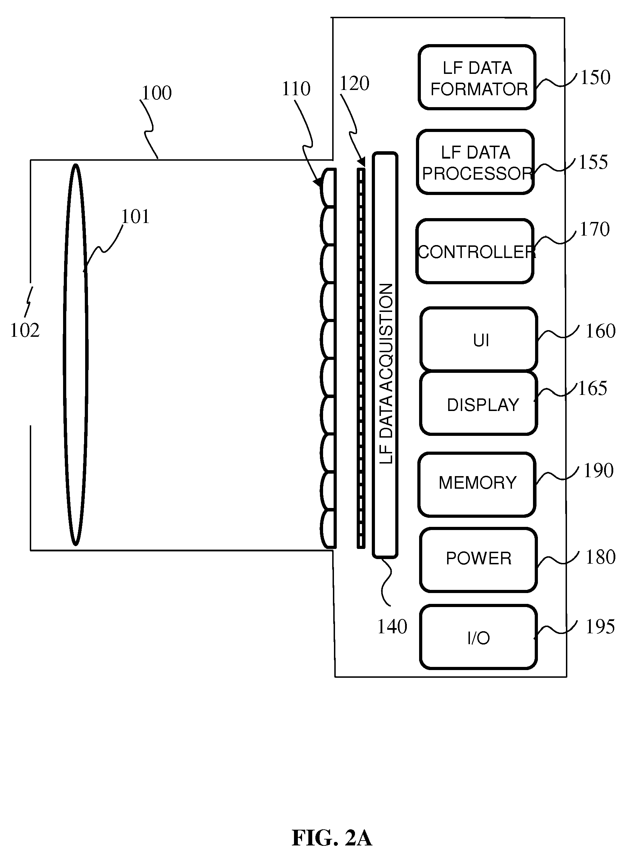

Figure 2A is a block diagram of a light field camera device in accordance with an embodiment of the invention. The light field camera comprises an aperture/shutter 102, a main (objective) lens 101, a micro lens array 110 and a photosensor array 120 in accordance with the light field camera of Figure 1A. In some embodiments the light field camera includes a shutter release that is activated to capture a light-field image of a subject or scene. It will be appreciated that the functional features may also be applied to the light field camera of Figure 1B.

The photosensor array 120 provides light field image data which is acquired by LF Data acquisition module 140 for generation of a light field data format by light field data formatting module 150 and/or for processing by light field data processor 155. Light field data may be stored, after acquisition and after processing, in memory 190 in a raw data format, as sub aperture images or focal stacks, or in a light field data format in accordance with embodiments of the invention.

In the illustrated example, the light field data formatting module 150 and the light field data processor 155 are disposed in or integrated into the light field camera 100. In other embodiments of the invention the light field data formatting module 150 and/or the light field data processor 155 may be provided in a separate component external to the light field capture camera. The separate component may be local or remote with respect to the light field image capture device. It will be appreciated that any suitable wired or wireless protocol may be used for transmitting light field image data to the formatting module 150 or light field data processor 155; for example the light field data processor may transfer captured light field image data and/ or other data via the Internet, a cellular data network, a WiFi network, a BlueTooth communication protocol, and/ or any other suitable means.

The light field data formatting module 150 is configured to generate data representative of the acquired light field, in accordance with embodiments of the invention. The light field data formatting module 150 may be implemented in software, hardware or a combination thereof.

The light field data processor 155 is configured to operate on raw light field image data received directly from the LF data acquisition module 140 for example to generate focal stacks or a matrix of views in accordance with embodiments of the invention. Output data, such as, for example, still images, 2D video streams, and the like of the captured scene may be generated. The light field data processor may be implemented in software, hardware or a combination thereof.

In at least one embodiment, the light field camera 100 may also include a user interface 160 for enabling a user to provide user input to control operation of camera 100 by controller 170. Control of the camera may include one or more of control of optical parameters of the camera such as shutter speed, or in the case of an adjustable light field camera, control of the relative distance between the microlens array and the photosensor, or the relative distance between the objective lens and the microlens array. In some embodiments the relative distances between optical elements of the light field camera may be manually adjusted. Control of the camera may also include control of other light field data acquisition parameters, light field data formatting parameters or light field processing parameters of the camera. The user interface 160 may comprise any suitable user input device(s) such as a touchscreen, buttons, keyboard, pointing device, and/ or the like. In this way, input received by the user interface can be used to control and/ or configure the LF data formatting module 150 for controlling the data formatting, the LF data processor 155 for controlling the processing of the acquired light field data and controller 170 for controlling the light field camera 100.

The light field camera includes a power source 180, such as one or more replaceable or rechargeable batteries. The light field camera comprises memory 190 for storing captured light-field data and/or rendered final images or other data such as software for implementing methods of embodiments of the invention. The memory can include external and/ or internal memory. In at least one embodiment, the memory can be provided at a separate device and/ or location from camera 100. In one embodiment, the memory includes a removable/swappable storage device such as a memory stick.

The light field camera may also include a display unit 165 (e.g., an LCD screen) for viewing scenes in front of the camera prior to capture and/or for viewing previously captured and/or rendered images. The screen 165 may also be used to display one or more menus or other information to the user. The light field camera may further include one or more I/O interfaces 195, such as FireWire or Universal Serial Bus (USB) interfaces, or wired or wireless communication interfaces for data communication via the Internet, a cellular data network, a WiFi network, a BlueTooth communication protocol, and/ or any other suitable means. The I/O interface 195 may be used for transferring data, such as light field representative data generated by LF data formatting module in accordance with embodiments of the invention and light field data such as raw light field data or data processed by LF data processor 155, to and from external devices such as computer systems or display units, for rendering applications.

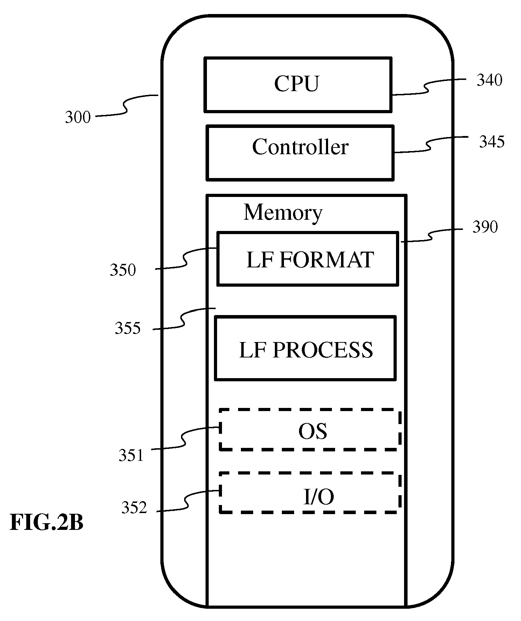

Figure 2B is a block diagram illustrating a particular embodiment of a potential implementation of light field data formatting module 150 and the light field data processor 153.

The circuit 300 includes memory 390, a memory controller 345 and processing circuitry 340 comprising one or more processing units (CPU(s)). The one or more processing units 340 are configured to run various software programs and/or sets of instructions stored in the memory 390 to perform various functions including light field data formatting and light field data processing. Software components stored in the memory include a data formatting module (or set of instructions) 350 for generating data representative of acquired light data in accordance with embodiments of the invention and a light field data processing module (or set of instructions) 355 for processing light field data in accordance with embodiments of the invention. Other modules may be included in the memory for applications of the light field camera device such as an operating system module 351 for controlling general system tasks (e.g. power management, memory management) and for facilitating communication between the various hardware and software components of the device 300, and an interface module 352 for controlling and managing communication with other devices via I/O interface ports.

Figure 3 illustrates an example of a 2D image formed on the photosensor array 120 of Figure 1A or the photosensor array 220 of Figure 1B. The 2D image, often referred to as a raw 4D light field image, is composed of an array of micro images MI, each micro image being produced by the respective micro lens $(i,j)$ of the microlens array 110,210. The micro images are arranged in the array in a rectangular lattice structure defined by axes $i$ and $j$. A micro lens image may be referenced by the respective micro lens coordinates $(i,j)$. A pixel PI of the photosensor 120, 220 may be referenced by its spatial coordinates $(x,y)$. 4D light field data associated with a given pixel may be referenced as $(x,y,i,j)$ where x and y are referenced for each micro lens; For example for a micro lens having co-ordinates $(i,j)$ and 20x20 pixels $0<x<19$ and $0<y<19$.

There are several ways of representing (or defining) a 4D light-field image. For example, a 4D light-field image can be represented, by a collection of micro-lens images as previously described with reference to Figure 3. A 4D light-field image may also be represented, when recorded by a plenoptic camera by a set of sub-aperture images. Each sub-aperture image of composed of pixels of the same position selected from each microlens image. Furthermore, a 4D light-field image may be represented by a set of epipolar images.

Embodiments of the invention provide representation of light field data based on the intersection of rays from a light field scene through a plurality of given geometrical planes. In this way the diversity in formats and light field devices may be taken into account.

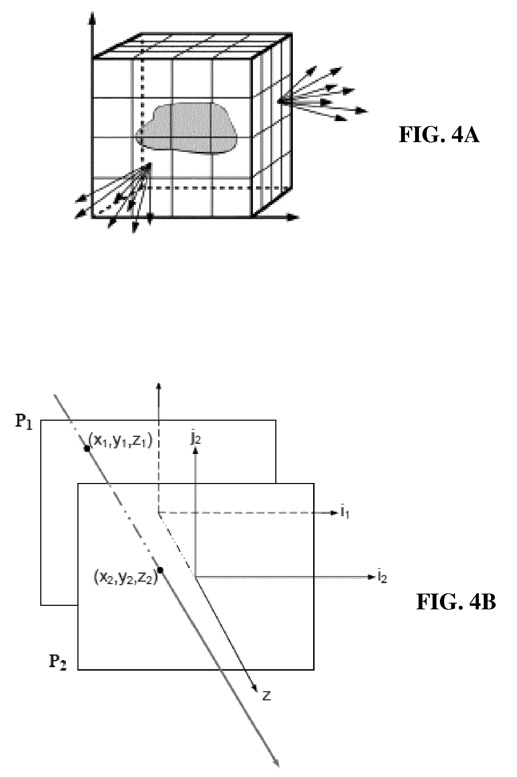

For the purposes of simplicity, a method for parametrizing the four dimensions of lightfield radiance may be with reference to the cube illustrated in Figure 4A. All six faces of the cube may be used to parameterize the light-field. In order to parameterise direction, a second set of planes parallel to the cube faces, may be added. In this way the light field may be defined with respect to six pairs of planes with normals along the axis directions as:

$$\vec{i}, -\vec{i}, \vec{j}, -\vec{j}, \vec{k}, -\vec{k}$$

Figure 4B illustrates a light field ray passing through two reference planes P1 and P2 used for parameterisation positioned parallel to one another and located at known depths $z_1$ and $z_2$ respectively. The light field ray intersects the first reference plane $P_1$ at depth $z_1$ at intersection point $(x_1, y_1)$ and intersects the second reference plane $P_2$ at depth $z_2$ at intersection point $(x_2, y_2)$. In this way the light field ray may be identified by four coordinates $(x_1, y_1, x_2, y_2)$. The light field can thus be parameterized by a pair of reference planes for parameterization $P_1$, $P_2$ also referred herein as parametrization planes, with each light field ray being represented as a point $(x_1, y_1, x_2, x_2,) \in R^4$ in 4D ray space.

For example an origin of the reference co-ordinate system may be placed at the center of a plane $P_1$ generated by the basis vectors of the coordinate axis system $(\vec{i_1}, \vec{j_1})$. The $\vec{k}$ axis is normal to the generated plane $P_1$ and the second plane $P_2$ can be placed for the sake of simplicity at a distance $z=\Delta$ from plane $P_1$ along the $\vec{k}$ axis. In order to take into account the six different directions of propagation the entire light-field may be characterized by six pairs of such planes. A pair of planes, often referred to as a light slab characterizes the light-field interacting with the sensor or sensor array of the light field camera along a direction of propagation.

The position of a reference plane for parameterization can be given as: $\vec{x_0} = d\vec{n}$ where $\bar{n}$ is the normal and $d$ is an offset from the origin of the 3D coordinate system along the direction of the normal.

A Cartesian equation of a reference plane for parameterisation can be given as:

$$\vec{n}(\vec{x} - \vec{x_0}) = 0$$

If a light field ray has a known position: $\vec{x_i}(x_i, y_i, z_i)$ and a normalised propagation vector: $\vec{u}(u_1, u_2, u_3)$ the general parametric equation of a ray in 3D may be given as :

$$\vec{x} = t\vec{u} + \vec{x_i}$$

The co-ordinates of the intersection $\vec{x1}$ between the light field ray and a reference plane are given as:

$$\vec{x_1} = \vec{x_i} + \vec{u}\frac{\vec{n}(\vec{x_0} - \vec{x_i})}{\vec{u}\vec{n}} \qquad (A)$$

There is no intersection between the light field rays and the reference parameterization if the following condition is not satisfied:

$$(\vec{x_1} - \vec{x_0})\vec{u} > 0$$

Due to the perpendicularity with one of the axes of the system of the pair of reference planes used to parameterize the light-field, one of the components of the ray intersection is always constant for each plane. Hence if there is an intersection of a light field ray $\vec{x1}$ with the first reference plane, and the intersection $\vec{x2}$ of the said light fieldwith the second reference plane, four coordinates vary and equation A can be used to calculate the four parameters of a light field ray. These four parameters can be used to build up a 4D ray diagram of the light-field.

Assuming parameterization of the light-field with reference to two parameterization reference planes, data representing the light field may be obtained as follows. If a reference system is set as pictured in Figure 5 a first parametrization plane P1 is perpendicular to z axis at z = z1, a second parametrization plane P2 is arranged perpendicular to the z axis at z = z2 and a ray whose light field parameters are L(x1; y1; x2; y2) are to be rendered at a location z = z3 where a photosensor array of a light field camera is positioned. From equation (A) :

$$\vec{x_3} = \vec{x_2} + \vec{u}\frac{\vec{n}(z_3\vec{n} - \vec{x_2})}{\vec{u}\vec{n}}$$

$$\vec{x_3} = \vec{x_1} + \vec{u}\frac{\vec{n}(z_3\vec{n} - \vec{x_1})}{\vec{u}\vec{n}}$$

with

$$\vec{u} = \frac{\vec{x_2} - \vec{x_1}}{\|\vec{x_2} - \vec{x_1}\|} = (u_x, u_y, u_z)$$

$$\vec{n}(0,0,1)$$

Developing the above expression gives:

$$x_3 = x_2 + \frac{u_x}{u_z}(z_3 - z_2)$$

$$y_3 = y_2 + \frac{u_y}{u_z}(z_3 - z_2)$$

$$z_3 = z_3$$

$$x_3 = x_1 + \frac{u_x}{u_z}(z_3 - z_1)$$

$$y_3 = y_1 + \frac{u_y}{u_z}(z_3 - z_1)$$

$$z_3 = z_3$$

Both sets of equation should deliver the same point $\vec{x3}$ as the rendered light field ray at the new location. By replacing $u_x$; $u_y$; $u_z$ with their corresponding expression as functions of $\vec{x1}$ and $\vec{x2}$, if the second set of equation from the previous block is used and x3 and y3 are added together:

$$x_1 + \frac{z_3 - z_1}{z_2 - z_1}(x_2 - x_1) + y_1 + \frac{z_3 - z_1}{z_2 - z_1}(y_2 - y_1) = x_3 + y_3$$

Leading to the expression:

$$(z_2 - z_3)(x_1 + y_1) + (z_3 - z_1)(x_2 + y_2) = (z_2 - z_1)(x_3 + y_3)$$

(B)

Co-ordinates with a subscript $_3$ relate to a known point $(x_3, y_3, z_3)$ where the light field is rendered. All depth co-ordinates $z_i$ are known. The parameterisation planes are in the direction of propagation or rendering. The light field data parameters L are $(x_1, y_1, x_2, y_2)$

The light field rays that form an image at point $(x_3, y_3, z_3)$ are linked by expression (B) which defines a hyper plane in $\mathbb{R}^4$.

This signifies that if images are to be rendered from a two-plane parametrized light-field, only the rays in the vicinity of hyperplanes need to be rendered, there is no need to trace them.

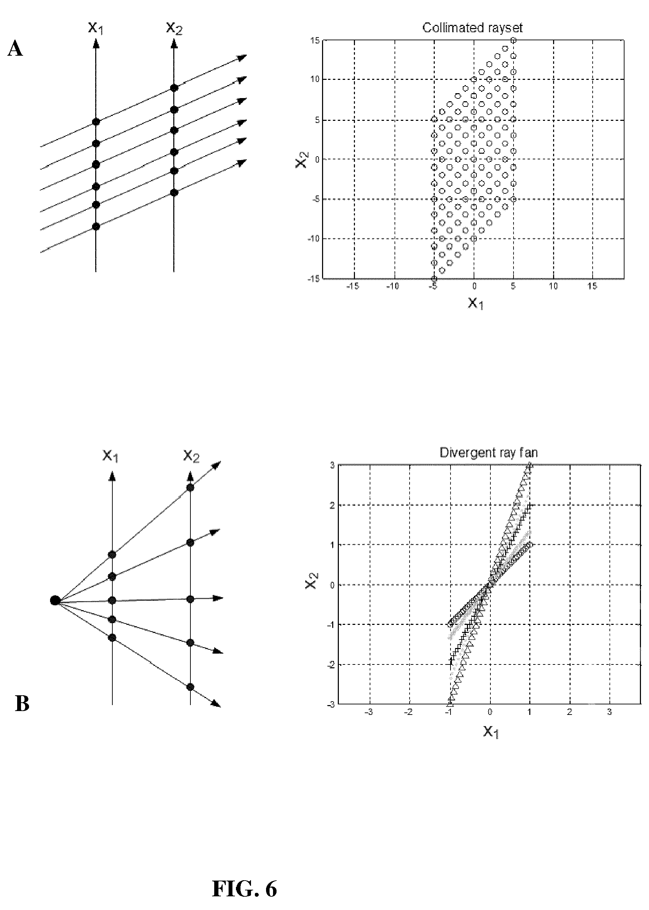

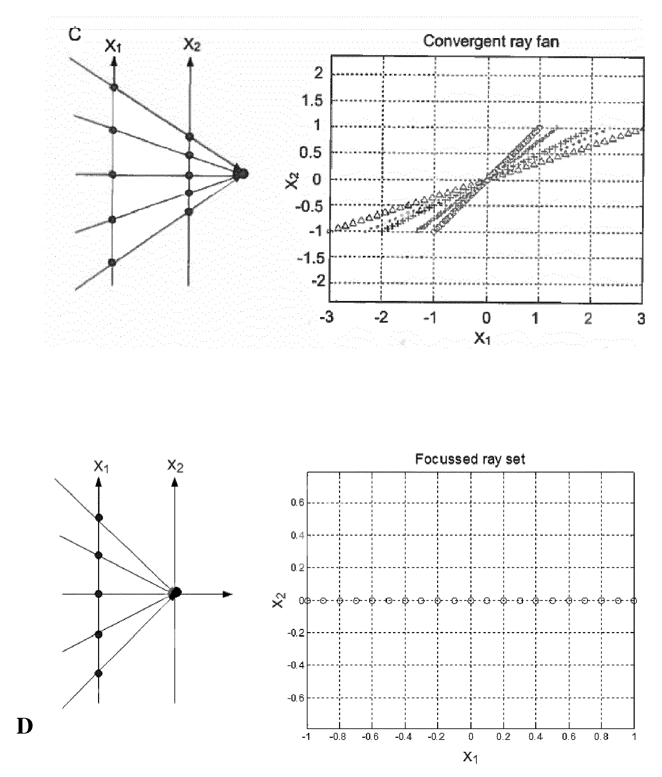

As the light-field is a function of four variables, it can be difficult to illustrate in general. To facilitate illustration a 2D slice may be used and particular sets of light field rays mapped into 2D graphical representations. Figure 6 shows examples of two different representations of such 2D slices restricted to the $x_1$ and $x_2$ axes. The left hand side, of Figure 6 illustrates respective 2D slices for different arrangements of light field rays. On the right hand side, the light-field data for each set of rays is graphically illustrated in a 2D ray coordinate system or 2D ray diagram, also referred to as a phase-space system. Each point corresponds to a light ray and is defined by its $x$ intersection point $x_1$ with the first reference plane $P_1$ and its $x$ intersection point $x_2$ with the second reference plane $P_2$.

Figure 6A shows a collimated set of rays, Figure 5B shows a divergent ray fan, Figure 5C shows a convergent set of rays and Figure 5D depicts a focused ray fan.

In the 2D ray diagram of Figure 6A, collimated set of light field rays with various angles of incidence are represented. When the ray set is parallel to the k axis, then each light field ray is plotted along a 45° line. When the set of rays are more inclined, the line shifts upwards in the 2D diagram, and when the set of light field rays are directed downwards, the line also shifts downward (negative x2). Consequently parallel rays will map onto a line at 45°, and if the parallel set of rays makes an angle with the z axis, the $x_2$ line intercept shifts accordingly. In the 2D ray diagram of Figure 6B various different degrees of divergence are plotted. As the point of divergence is moved from infinity toward the axis $x_i$, the 2D ray line representation remains linear but the steepness of the lines increases with the amount of divergence. At the limit, if the point from where the set of rays diverges is on the x1 axis, the rays would be plotted along the vertical axis $x_2$ on the 2D ray diagram. The 2D ray diagram of Figure 6C, graphically represents a convergent set of rays. As the point of convergence is pulled toward the $x_2$ axis, the rays map to lines of decreasing gradient. The ray diagram of Figure 6D is the limit when the convergence point is on $x_2$, a focused set of rays, then all rays on the diagram are located on the horizontal axis.

In embodiments of the invention a ray diagram may be used as basic representation of a light field captured by one or more light field cameras with certain portions of the light field data being generated from the raw captured format, in particular a 4D ray diagram.

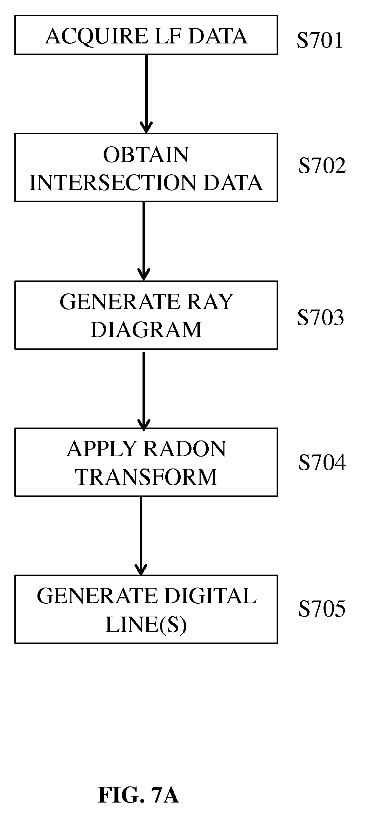

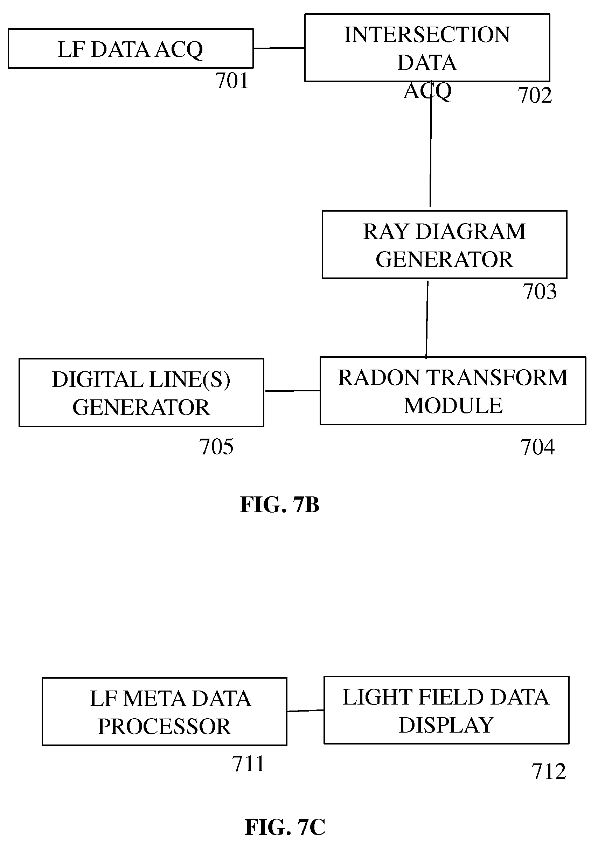

Figure 7A is a flow chart illustrating the steps of a method for generating data representative of a light field according to one or more embodiments of the invention. Figure 7B is a block diagram schematically illustrating the main modules of a system for generating data representative of a light field according to one or more embodiments of the invention.

In a preliminary step S701 of the method raw light field data is acquired by a light field camera 701. The raw light field data may for example be in the form of micro images as described with reference to Figure 3. The light field camera may be a light field camera device such as shown in Figures 1A or 1B and 2A and 2B.

In step S702 the acquired light field data is processed by ray parameter module 702 to provide intersection data $(x_1, y_1, x_2, y_2)$ defining intersection of captured light field rays with a pair of reference planes for parameterization $P_1$, $P_2$ at respective depths $z_1, z_2$.

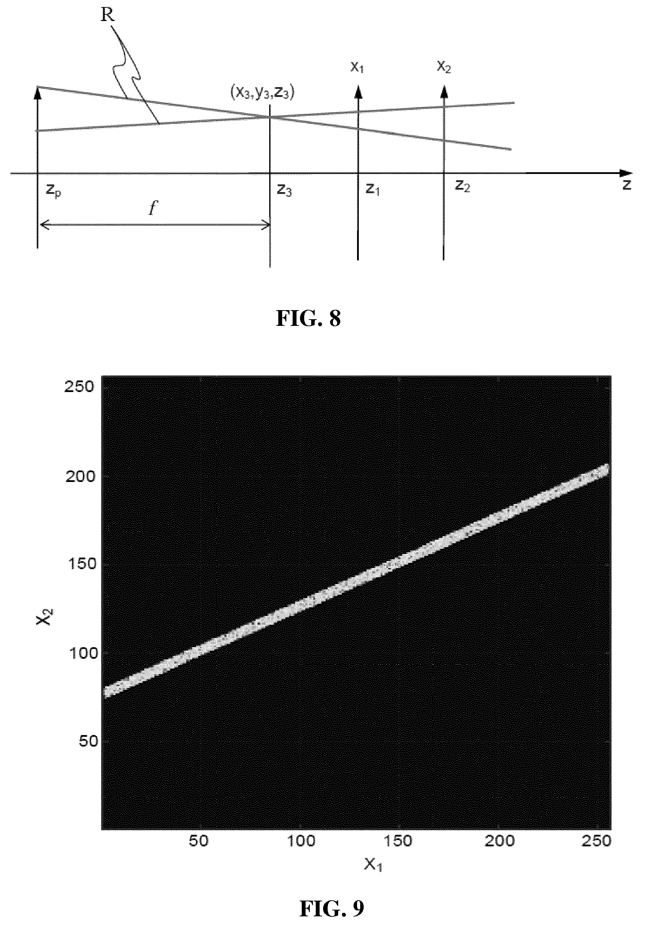

From calibration of the camera the following parameters can be determined: the center of projection $(x_3, y_3, z_3)$ the orientation of the optical axis of the camera and the distance $f$ from the pinhole of the camera to the plane of the photosensor. The light field camera parameters are illustrated in Figure 8. The photosensor plane is located at depth

$z_p$. The pixel output of the photosensor is converted into geometrical representation of light field rays. A light-slab comprising the two reference planes $P_1$ and $P_2$ is located at depths $z_1$ and $z_2$, respectively, beyond $z_3$, at the other side of the centre of projection of the camera to the photosensor. By applying a triangle principle to the light rays rays, pixel coordinates $(x_p, y_p, z_p)$ recording the light projected from the array of microlenses can be mapped to ray parameters i.e. reference plane intersection points $(x_1, y_1, x_2, y_2)$ by applying the following expression:

$$x_1 = \frac{z_3 - z_1}{z_3 - z_p}\, x_p + \frac{z_1 - z_p}{z_3 - z_p}\, x_3$$

$$y_1 = \frac{z_3 - z_1}{z_3 - z_p}\, y_p + \frac{z_1 - z_p}{z_3 - z_p}\, y_3$$

$$x_2 = \frac{z_3 - z_2}{z_3 - z_p}\, x_p + \frac{z_1 - z_p}{z_3 - z_p}\, x_3$$

$$y_2 = \frac{z_3 - z_2}{z_3 - z_p}\, y_p + \frac{z_1 - z_p}{z_3 - z_p}\, y_3$$

The above calculation may be extended to multiple cameras with different pairs of triplets $(x_p, y_p, z_p)$ $(x_3, y_3, z_3)$:

In the case of a plenoptic camera, a camera model with an aperture is used and a light field ray is described in the phase space as having an origin $(x_p, y_p, z_p)$ and a direction $(x'_3, y'_3\ 1)$. Its propagation unto the plane $(x_3, y_3)$ at depth $z_3$ can be described as a matrix transform. The lens will act as an ABCD matrix to refract the ray and another ABCD propagation matrix will bring the ray onto the light-slab reference planes $P_1$ and $P_2$.

From this step intersection data $(x_1, y_1, x_2, y_2)$ geometrically defining intersection of light field rays with reference planes $P_1$, $P_2$ is obtained.

In step S703 2D ray a diagram graphically representing the intersection data $(x_1, y_1, x_2, y_2)$ is obtained by ray diagram generator module 703.

Figure 9 is a 2D ray diagram graphically representing intersection data $(x_1, x_2)$ of light field rays captured by a camera at location $x_3 = 2$ and depth $z_3 = 2$ with an aperture $|A| < 0.5$. The data lines of the ray diagram used to parameterise are sampled by 256 cells providing an image of 256x256 pixels.

If the ray diagram illustrated in Figure 9 is interpreted as a matrix of 256x256 elements, it can be seen that it is sparsely populated. If the rays were to be saved individually in a file instead of the 4D phase space matrix, this would require saving for each ray, at least 2 bytes (int16) for each position $x_i$ or $x_3$ plus 3 bytes for the color, i.e. 7 bytes per ray for a 2D slice light-field, and 11 bytes per ray for its full 4D representation. Even then, the rays would be stored randomly in the file which might be unsuitable for applications that need to manipulate the representation. The inventors of the present invention have determined how to extract only the representative data from the ray diagram matrix and to store the data in a file in a structured manner.

Since the light field rays are mapped along data lines of the 2D ray diagram, it is more efficient to store parameters defining the data line rather than the line values themselves. Parameters defining the data line such as, for example, a slope defining parameter $s$ and an axis intercept $d$ may be stored with the set of light field rays belonging to that data line.

This could require for example as little as 2 bytes for slope parameter s, 2 bytes for slope parameter d and then only 3 bytes per ray, Moreover, the rays may be ordered along lines in the file. In order to set lines through matrix cells so called digital lines are generated which approximate the ray lines with minimum error.

To locate the data lines and to obtain slope parameter s and intercept parameter d step S704 a Radon transform is performed by line detection module 704 on the ray diagram generated in step S703.

From the obtained slope parameter $s$ and intercept parameter $d$ a representative digital line is generated by digital line generation module 705 in step S705. In this step digital lines are generated by approximating an analytical line to its nearest grid point, for example by applying Bresenham's algorithm. Indeed Bresenham's algorithm provides a way to provide a digital line with minimal operation. Other methods may apply a fast discrete Radon transform calculation. An example of Bresenham application is one adapted from the following reference: http://www.cs.helsinki.fi/group/goa/mallinnus/lines/bresenh.html.

The digital format defines the data line by two points of a grid $(0,d)$ and $(N-1,s)$ d being the interception corresponding to the value of $x_2$ when $x_1 = 0$ and s being the slope parameter corresponding to the value of $x_2$ when $x_1 = N-1$. From the digital format generated the slope a of each individual line may be expressed as a function of d, N and s, as:

$$a = \frac{s - d}{N - 1}$$

where:

$s \in \{0, 1, .... N - 1\}$ and $d \in \{0, 1, .... N - 1\}$

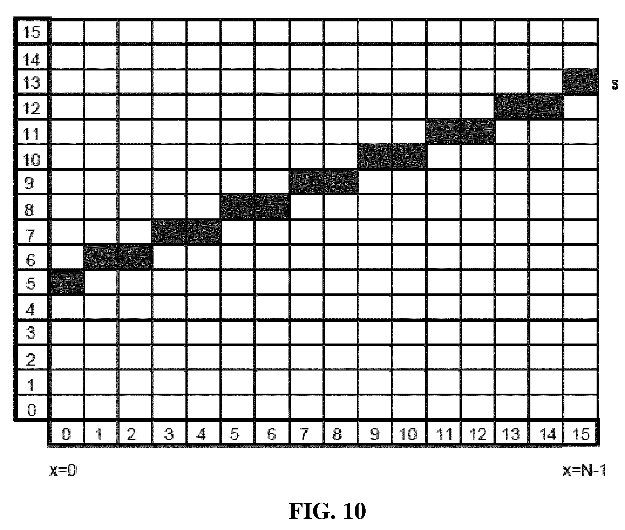

Figure 10 illustrates an example of a digital line generated by application of Bresenham's algorithm.

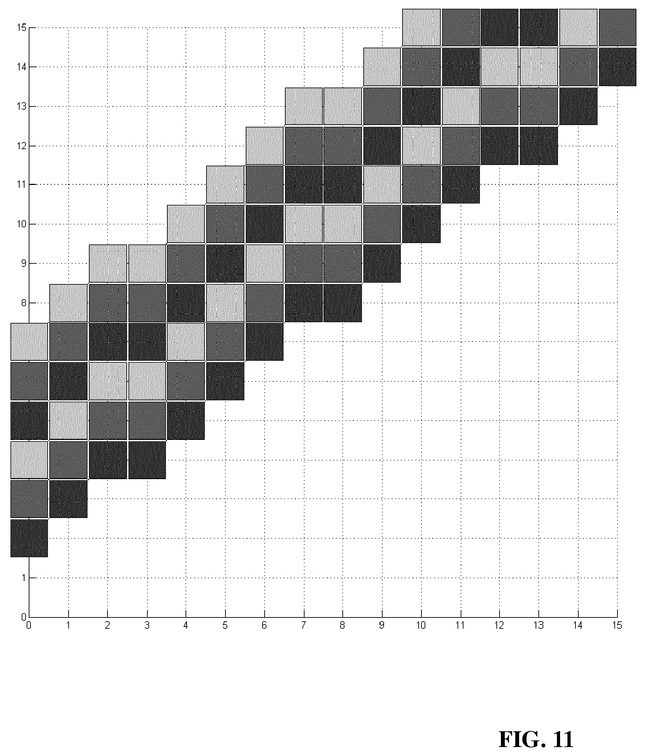

Figure 11 illustrates a group of digital lines having the same slope a (or s - d) but different intercepts d, the group of data lines being contiguous. The group of data lines is referred to herein as a bundle of lines and corresponds to a beam resulting from the camera not being ideally pinpoint. Each line addresses different pixels. In other words, one pixel belongs only to a unique line of a bundle with the same slope but different intercepts. The upper and lower boundaries of the axis interceptions d are given as $d_{max}$ and $d_{min}$ respectively.

Ray data parameterized by a sampled pair of lines (in 2D) and belonging to one camera, belong to a family of digital lines (beam) in the phase space used for representing the data. The header of the beam can simply contain the slope a and the thickness of the beam defined by the upper and lower boundaries of the axis interceptions $d_{max}$ - $d_{min}$. The ray values will be stored as RGB colors along digital lines whose header can be d and s. Void cells of the ray diagram in the sampled space do not need to be stored. Coordinates $x_1$; $x_2$ of the rays can be deduced from the parameters d, s and from the position of the cell along the digital line.

Parameters to be estimated from the lightfield or from camera's geometry are the slope a the lower and upper bounds of the digital line intercepts $(d_{min}, d_{max})$, and the digital line parameters $(d_i, s_i)$. The discrete Radon transform has already been discussed as a tool to measure the support location of the light-field in the ray diagram.

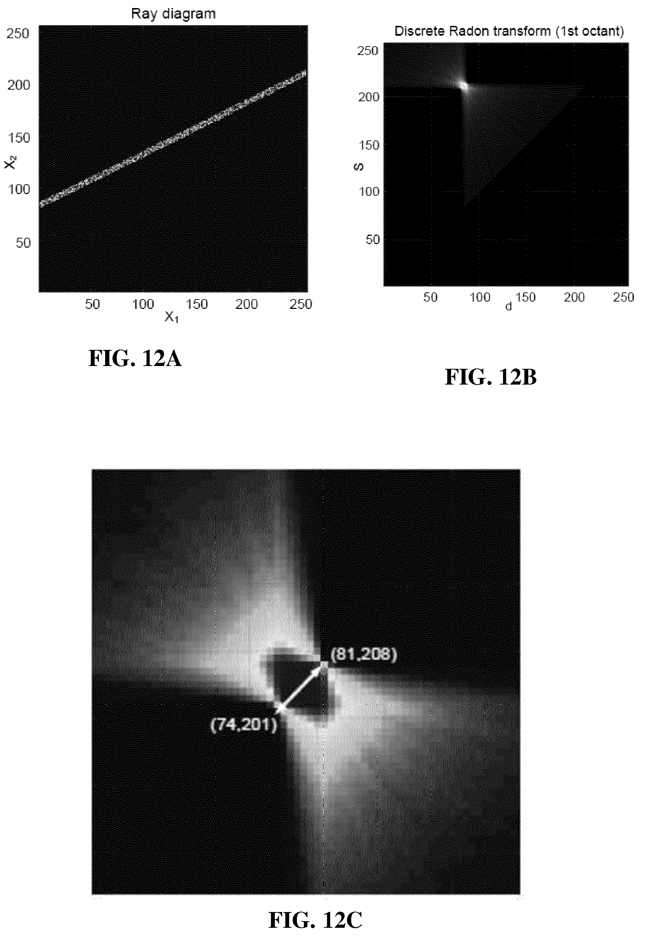

Figure 12B shows the discrete Radon transform in the digital line parameter space (d, s) of the datalines of Figure 12A. Figure 12C is a zoom of the region of interest comprised in Figure 12B. The beam of digital lines is located by the search for the maximum value parameters. There could be some offset between the geometrical center of symmetry of the DRT and the actual position of the maximum due to image content so that later on, an algorithm is used to pin-point the center of symmetry instead of the maximum. Then, the waist of the beam transform as shown on Figure 12C is easy to find to give the values $(d_{min}, d_{max})$. Point $(d_{min} = 74, s = 201)$ is the lower envelope of the beam of digital lines from Figure 12A, and point $(d_{max} = 81, s = 208)$ is the upper envelope of the beam of digital lines.

The equations of two orthogonal 2D sliced spaces from equation B is given as.

$$(z_2 - z_3)(x_1 + y_1) + (z_3 - z_1)(x_2 + y_2) = (z_2 - z_1)(x_3 + y_3) \quad (C)$$

If a 2D slice for $x_i$ coordinates is taken, the equation of the beam of lines where ray data will map through an aperture of size A at $(x_3, y_3, z_3)$ is given as:

$$x_2 = \frac{(z_3 - z_2)}{(z_3 - z_1)}x_1 + \frac{(z_2 - z_1)}{(z_3 - z_1)}(x_3 \pm A) = mx_1 + \left(d_{max_x} - d_{min_x}\right) \quad (D)$$

Similarly, if a 2D slice is taken for $y_i$ coordinates:

$$y_2 = \frac{(z_3 - z_2)}{(z_3 - z_1)}y_1 + \frac{(z_2 - z_1)}{(z_3 - z_1)}(y_3 \pm A) = my_1 + \left(d_{max_y} - d_{min_y}\right) \quad (E)$$

As previously described, the values of m and $d_{max_x}, d_{min_x}, d_{max_y}, d_{min_y}$ may be evaluated in the discrete Radon domain. To localize the characteristics of a light-field as defined by the format discussed previously, there is no need to perform a 4D discrete Radon transform. If two orthogonal 2D DRT are obtained, measurements can be performed of the slope m of the hyper-plane and the beam width of the digital hyper-planes where all data concentrates in the 4D ray-diagram.

This simpler procedure of location assumes a circular entrance pupil $A$ so that $d_{max_x}$, $d_{min_x}$, $d_{max_y}$, $d_{min_y}$ will encompass all hyper-planes intercepts, some values written in the format will contain no values.

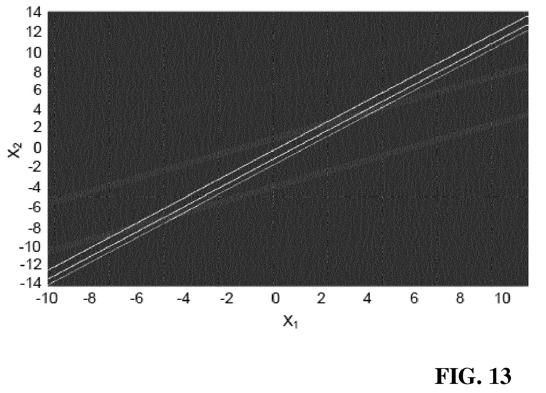

It would be interesting to obtain a format for the 4D case which is similar to what was proposed for the 2D case. To do so, it would be interesting to associate the 2D lines found on the $\Pi(x_1,x_2)$, plane with the lines found on the $\Pi(y_1,y_2)$ place, i.e., the lines that are the results of the intersection of the corresponding hyper plane with the two orthogonal slices of $\Pi(x_1,x_2)$, and $\Pi(y_1,y_2)$, From expressions D and E, it is known that the corresponding lines have the same slope m. This is the first parameter that associates each line in $\Pi(x_1,x_2)$ to a line in $\Pi(y_1,y_2)$, for a camera at a certain depth. If there are multiple cameras at the same depth (i.e., the case of Fig. 13A), there are three lines in $\Pi(x_1,x_2)$, and three lines in $\Pi(y_1,y_2)$, with the same estimated slope of $m$. The correspondences in the line offsets between the lines in these two planes are then determined. To do this, the formulation of the lines in expressions D and E are exploited. In particular, denoting

$$k = \frac{z_2 - z_1}{z_3 - z_1},$$

the offsets are as follows:

$$\begin{cases} kx_3 + kA = d_{max_x} \\ kx_3 - kA = d_{min_x} \end{cases} \quad \text{(F)}$$

and

$$\begin{cases} ky_3 + kA = d_{max_y} \\ ky_3 - kA = d_{min_y} \end{cases} \quad \text{(G)}$$

The sets of the equations may be solved for $k$, $x_3$ and $y_3$. Note that $(x_3, y_3, z_3)$ correspond to the coordinates of the camera, or in other words the voxel where the corresponding bundle of light is focused into a circle of the radius $A$. We have supposed that the aperture on the plane positioned at $z_3$ is circular, so that $d_{max_x}$-$d_{min_x}$ = $d_{max_y}$ - $d_{min_y}$ = $2kA$, and by solving the previous sets of equations:

$$k = \frac{d_{max_x} - d_{min_x}}{2A} \quad \text{(G)}$$

$$x_3 = A \frac{d_{max_x} + d_{min_x}}{d_{max_x} - d_{min_x}} \quad \text{(H)}$$

$$y_3 = A \frac{d_{max_y} + d_{min_y}}{d_{max_y} - d_{min_y}} \quad \text{(I)}$$

$$z_3 = \frac{z_2 + (k-1)z_1}{k} \quad \text{(J)}$$

The digital lines may be scanned as before on $\Pi(x_1,x_2)$ using the Bresenham digital lines; For each individual $(x_1,x_2)$ value, the corresponding $(y_1,y_2)$ values captured in the light field are stored. To find such values, expression (C) is exploited. All the following are either known or estimated from expressions (F) and (G) $x_3$; $y_3$; $z_3$; $z_1$; $z_2$

Moving on each line in $\Pi(x_1,x_2)$, for each $\left(x_1^q, x_2^q\right)$, the following relationship in $(y_1,y_2)$ is obtained:

$$y_2 = \frac{z_3 - z_2}{z_3 - z_1}y_1 + \frac{z_3 - z_2}{z_3 - z_1}x_1^q + \frac{z_2 - z_1}{z_3 - z_1}\left(x_3 + y_3{}^*\right) - x_2^q$$

or,

$$y_2 = my_1 + mx_1^q + k(x_3 + y_3{}^*) - x_2^q = my_1 + d_{off}\left(x_1^q, x_2^q, x_3, y_3{}^*\right)$$

For each point in $\Pi(x_1,x_2)$, a collection of lines in $\Pi(y_1,y_2)$ is saved. $d_{off}$ corresponds to the offset of the lines scanned and saved for $\left(x_1^q, x_2^q\right)$. It is noted that:

$$d_{off}\left(x_1^q, x_2^q\right) = mx_1^q + k(x_3 + y_3{}^*) - x_2^q$$

With reference to Figure 11 each square is a $\left(x_1^q, x_2^q\right)$, point, and for each one of these points, there is a set of Bresenham digital lines running out of the plane of the figure along a digital bundle defined by equation:

$$y_2 = my_1 + d_{off}\left(x_1^q, x_2^q, x_3, y_3{}^*\right) \qquad \text{(K)}$$

perpendicular to the depicted datalines, but in a 4D space. Here, $y_3^*$ varies between $y_3$ - $A$ to $y_3$ + $A$.

An exemplary data format for a bundle of data lines per camera is illustrated in Table 1.

| Tags | | | Data | | | |
|---|---|---|---|---|---|---|
| Parametrization plane offset $z_2$-$z_1$ ($z_3$ is relative to $z_1$) (float) | | | $\Delta z$ | | | |
| Width in number of $x_1$ cells (integer) | min $x_1$ value (float) | max $x_1$ value (float) | N | $x_{1min}$ | $x_{1Max}$ | |
| Width in number of $x_2$ cells (integer) | min $x_2$ value (float) | max $x_2$ value (float) | M | $x_{2min}$ | $x_{2Max}$ | |
| Width in number of $y_1$ cells (integer) | min $y_2$ value (float) | max $y_1$ value (float) | P | $Y_{1min}$ | $Y_{1Max}$ | |
| Width in number of $y_2$ cells (integer) | min $y_2$ value (float) | max $y_2$ value (float) | Q | $Y_{2min}$ | $Y_{2Max}$ | |
| Number of cameras (integer) | | | n | | | |
| Aperture size for $cam_1$ | | | $A_1$ | | | |
| $Cam_1$ focus (3 floats) | | | $x3_1$ | $y3_1$ | $z3_1$ | |
| lowest $cam_1$ intercept in $(x_1,x_2)$ | $cam_1$ steepness | $cam_1$ number of digital lines in $x_1,x_2$ | $d_1$ | $m_1$ | $l^x_1$ | |
| | | $cam_1$ number of digital lines in $y_1,y_2$ | | | $l^y_1$ | |
| data line ($end_1 \equiv l^x_1*N*l^y_1*P)*$ 3 bytes | | | $RGB_0$ | $RGB_1$ | ... | $RGB_{end1}$ |
| ... | | | ... | ... | | |
| ... | | | ... | ... | ... | ... |
| Aperture size for $cam_n$ | | | $A_n$ | | | |
| $Cam_n$ focus (3 floats) | | | $x3_n$ | $y3_n$ | $z3_n$ | |
| lowest $cam_n$ intercept in $(x_1,x_2)$ | $cam_n$ steepness | $Cam_n$ number of digital lines in $x_1,x_2$ | $d_n$ | $m_n$ | $l^x_n$ | |
| | | $Cam_n$ number of digital lines in $y_1,y_2$ | | | $l^y_n$ | |
| data line ($end_n \equiv l^x_n*N*l^y_n*P)*$ 3 bytes | | | $RGB_0$ | $RGB_1$ | ... | $RGB_{endn}$ |

Table 1

Firstly general metadata of the 4D space is provided: including boundaries of the 4 axes $x_1$, $x_2$, $y_1$, $y_2$ and their corresponding sampling. The number of cameras (bundles) is also provided. For each camera $j$ the following parameters are saved:

the size of the aperture: $A_j$;

the focus point of the camera: $cam_j$; focusPoint $=(x_3, y_3, z_3)$

lowest $d$ intercept in $(x1_x,2)= d_j$

steepness $= m_j$

number of digital lines in $\left(x_1, x_2\right) = l^x_j$

number of digital lines in $\left(y_1, y_2\right) = l^y_j$

On each camera, for each $(x^q{}_1; x^q{}_2)$, scanning is started on $(y_1, y_2)$ with respect to expression (K) using the Bresenham digital lines, and the RGB values are saved. $\mathbb{R}^4$ varies between $y_3 - A$ to $y_3 + A$ and the corresponding $d_{off}$ is calculated according to expression (K).

The same calculations are performed in the decoding step using the stored metadata. In particular, $k$ is found using equation (H). Hence the format remains compact. There is no need to store four indexes for each ray in the system. It is noted that the sampling of the hyper-plane above is the sampling of the 4D ray-space and thus a single $x_1$; $y_1$; $x_2$; $y_2$ location is not missed. This is only one example of a systematic scanning of the 4D ray-space for saving all data in a very compact form. Other processes may of course be applied. The parametric form seems to be adapted to explore the hyper-plane because it permits an inter-leaved space exploration.

In the case of multiple cameras to work on data that contains several bundles of hyper-planes (several maxima in the Radon transform due to multiple cameras), a more complex algorithm may be used. As a pre-processing step, the parameters ($m$, $k$) are found for all the peaks in the radon transform of $\Pi(x_1,x_2)$, and put in one set. The same is done for the peaks in $(y_1, y_2)$ and the parameters are put in another set. Now in each iteration of the greedy algorithm, the maximum peak intensity is found in the 2D radon transform of $(x_1, x_2)$ and the corresponding peak in $(y_1, y_2)$ is found by matching the previously found parameters $(m, k)$. After saving the data as mentioned in the last section, these peaks are cleaned from the radon transforms, and the next iteration is started, until nothing meaningful remains in the light field

Figure 7C illustrates a device for rendering at least one image from light field data comprising a processor 711 for processing data obtained in accordance with the method of any embodiment of the invention as hereinbefore described; and a display for rendering an image in accordance with the processed data

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

**Claims**

1. A computer implemented method for generating data representative of a light field comprising
   acquiring (S701) light field data representative of light field rays captured from a scene;
   obtaining (S702), from the acquired light field data, intersection data defining intersections of the light field rays from the scene with a plurality of given reference planes, said reference planes corresponding to different depths in the scene; and
   obtaining ray diagram parameters (S704, S705) defining the graphical representation of the intersection data in a ray diagram to provide data representative of the acquired light field data.

2. A method according to claim 1 wherein the interception data corresponding to the light field rays is graphically represented in the ray diagram as datalines and the ray diagram parameters include data representative of at least one of:

   the slope of a dataline; and
   an interception of a dataline with an axis of the ray diagram.

3. A method according to claim 2 wherein the datalines are detected in the ray diagram by applying a Radon transform.

4. A method according to claim 2 or 3 wherein the graphical representation is provided as a matrix of cells to provide a digital dataline, each digital dataline format being defined by a plurality of cells, at least one first cell representative of the interception of the line with an axis and at least one second cell from which the slope of the line may be determined.

5. A method according to claim 4 wherein each digital dataline is generated by application of Bresenham's algorithm.

6. A method according to claim 4 or 5 wherein the data representative of the acquired light field data comprises data defining the matrix of cells.

7. A method according to any preceding claim wherein the data representative of the acquired light field data further comprises colour data representing the colour of the corresponding light field rays.

8. A method according to any preceding claim wherein the data representative of the acquired light field data comprises data defining the number of cameras used to capture the light field rays.

9. A method according to any one of claims 2 to 8 wherein a beam of rays is represented as a plurality of lines having the same slope and different axis interception points.

10. A method according to claim 9 wherein the data representative of the acquired light field data comprises data representative of the thickness of the beam based on upper and lower boundaries of the axis interception data of lines of the beam.

11. A method according to claim 10 wherein the data representative of the acquired light field data is provided as meta data, the header of meta data comprising the ray diagram parameters defining the graphical representation of the intersection data in a ray diagram and the body of the metadata comprising data representative of colour of the ray.

**12.** A device for providing metadata for captured light field data,
the device comprising
a light field data acquisition module for acquiring light field data captured by a light field camera and
a light field data generation module configured to
obtain, from the acquired light field data, intersection data defining intersections of the light field rays from the scene
with a plurality of given reference planes, said reference planes corresponding to different depths in the scene; and
obtain ray diagram parameters defining the graphical representation of the intersection data in a ray diagram to
provide data representative of the acquired light field data.

**13.** A light field imaging device comprising:

an array of micro lenses arranged in a regular lattice structure;
a photosensor configured to capture light projected on the photosensor from the array of micro lenses, the
photosensor comprising sets of pixels, each set of pixels being optically associated with a respective micro lens
of the array of micro lenses; and
a device for providing metadata in accordance with claim 12.

**14.** A device for rendering an image from light field data
a processor for processing data obtained in accordance with the method of any one of claims 1 to 11; and
a display for rendering an image in accordance with the processed data

**15.** A data package for data representative of rays of a light field comprising
ray diagram parameters defining the graphical representation in a ray diagram of intersection data of the light rays,
the intersection data defining intersections of the light field rays from the scene with a plurality of given reference
planes, said reference planes corresponding to different depths in the scene; and
colour data defining colours of the light field ray.

**16.** A computer program product for a programmable apparatus, the computer program product comprising a sequence
of instructions for implementing a method according to any one of claims 1 to 10 when loaded into and executed
by the programmable apparatus.

**FIG. 1A**

**FIG. 1B**

**FIG. 2A**

**FIG.2B**

**FIG. 3**

First parametrization plane    Second parametrization plane    Rending plane

**FIG. 5**

FIG. 4A

FIG. 4B

**FIG. 6**

C

Convergent ray fan

D

Focussed ray set

ACQUIRE LF DATA    S701

OBTAIN
INTERSECTION DATA    S702

GENERATE RAY
DIAGRAM    S703

APPLY RADON
TRANSFORM    S704

GENERATE DIGITAL
LINE(S)    S705

**FIG. 7A**

LF DATA ACQ
701

INTERSECTION DATA ACQ
702

RAY DIAGRAM GENERATOR
703

DIGITAL LINE(S) GENERATOR
705

RADON TRANSFORM MODULE
704

**FIG. 7B**

LF META DATA PROCESSOR
711

LIGHT FIELD DATA DISPLAY
712

**FIG. 7C**

**FIG. 8**

**FIG. 9**

FIG. 10

FIG. 11

Ray diagram

**FIG. 12A**

Discrete Radon transform (1st octant)

**FIG. 12B**

**FIG. 12C**

**FIG. 13**

Europäisches
Patentamt

European
Patent Office

Office européen
des brevets

# EUROPEAN SEARCH REPORT

Application Number

EP 15 30 6434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/177062 A1 (NISHIYAMA TOMOHIRO [JP]) 25 June 2015 (2015-06-25) * paragraph [0033] - paragraph [0046] * | 1-16 | INV. G06T5/50 |
| A | YAMASHITA K ET AL: "Compressive acquisition of ray-space using radon transform", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 7237, 11 January 2009 (2009-01-11), XP040493754, ISSN: 0277-786X * the whole document * | 1-16 | |
| A | TODOR GEORGIEV ET AL: "The radon image as plenoptic function", 2014 IEEE INTERNATIONAL CONFERENCE ON IMAGE PROCESSING (ICIP), 27 October 2014 (2014-10-27), pages 1922-1926, XP55205391, DOI: 10.1109/ICIP.2014.7025385 ISBN: 978-1-47-995751-4 * the whole document * | 1-16 | TECHNICAL FIELDS SEARCHED (IPC) G06T |
| A | TODOR GEORGIEV ET AL: "Lytro camera technology: theory, algorithms, performance analysis", PROCEEDINGS OF SPIE, vol. 8667, 26 February 2013 (2013-02-26), page 86671J, XP55203972, ISSN: 0277-786X, DOI: 10.1117/12.2013581 * the whole document * | 1-16 | |
| A | US 2014/328535 A1 (SORKINE-HORNUNG ALEXANDER [CH]) 6 November 2014 (2014-11-06) * paragraph [0023] - paragraph [0055] * | 1-16 | |

The present search report has been drawn up for all claims

| Place of search | Date of completion of the search | Examiner |
|---|---|---|
| Munich | 7 March 2016 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                            
& : member of the same patent family, corresponding document

EPO FORM 1503 03.82 (P04C01)

**EP 3 144 884 A1**

## ANNEX TO THE EUROPEAN SEARCH REPORT
## ON EUROPEAN PATENT APPLICATION NO.

EP 15 30 6434

This annex lists the patent family members relating to the patent documents cited in  the above-mentioned European search report.
The members are as contained in the European Patent Office EDP file on
The European Patent Office is in no way liable for these particulars which are merely given for the purpose of information.

07-03-2016

| Patent document cited in search report | | | Publication date | Patent family member(s) | | | Publication date |
|---|---|---|---|---|---|---|---|
| US 2015177062 | A1 | | 25-06-2015 | JP | 2015119395 | A | 25-06-2015 |
| | | | | US | 2015177062 | A1 | 25-06-2015 |
| US 2014328535 | A1 | | 06-11-2014 | EP | 2806396 | A1 | 26-11-2014 |
| | | | | HK | 1200961 | A1 | 14-08-2015 |
| | | | | US | 2014328535 | A1 | 06-11-2014 |

EPO FORM P0459

For more details about this annex : see Official Journal of the European Patent Office, No. 12/82

33